# FASCICULE DE BREVET EUROPEEN

(11) **EP 0 570 342 B1**
(45) Date de publication et mention de la délivrance du brevet: **02.05.1997**
(21) Numéro de dépôt: 93810341.3
(22) Date de dépôt: 11.05.1993
(51) Int. Cl.: G11B 23/03, G11B 33/04

(54) **Cassette à disque**
Plattenkassette
Disc cartridge

(30) Priorité: 15.05.1992 CH 1565/92
(43) Date de publication de la demande: 18.11.1993
(73) Titulaire: CD Plant Tecval S.A., 1337 Vallorbe (CH)
(72) Inventeur: Tricart, Philippe, CH-1337 Vallorbe (CH)
(74) Mandataire: Hranitzky, Wilhelm Max

(56) Documents cités:
- EP-A- 0 230 695
- EP-A- 0 270 182
- EP-A- 0 277 809
- EP-A- 0 319 301
- EP-A- 0 370 690
- GB-A- 2 173 631
- US-A- 4 185 313
- US-A- 4 194 228
- US-A- 4 471 397
- US-A- 4 748 530

## Description

La présente invention concerne une cassette à disque du genre de celles que l'on utilise comme logement pour des disques servant de supports d'informations et qui sont agencées de manière à permettre la lecture et/ou l'enregistrement des informations, alors que le disque est logé dans la cassette. L'invention peut notamment s'appliquer dans le cas où le disque en question est du type désigné habituellement par le terme de "disque compact" ou "CD" et, plus particulièrement, celui où il s'agit d'un disque porteur d'informations désigné par le terme "CD-ROM". Toutefois, l'invention n'est nullement limitée à ce type de disque.

Les cassettes à disque de ce genre, de même que les disques destinés à être utilisés dans ces cassettes, sont agencés de manière à permettre leur utilisation dans des dispositifs de lecture et/ou d'enregistrement d'informations produits par différents fabricants.

L'invention concerne plus particulièrement une cassette à disque comprenant un élément de boîtier inférieur agencé pour servir de logement de disque, le fond de cet élément comportant une ouverture dont une partie est destinée à permettre le passage d'un arbre d'entraînement du disque en rotation, cet arbre appartenant à un appareil de lecture du disque, et dont une autre partie est destinée à permettre l'accès d'un dispositif de lecture du disque, appartenant à ce même appareil, et un couvercle de boîtier agencé de manière à permettre de fermer ou d'ouvrir la cassette, en constituant une paroi principale en regard du fond de l'élément de boîtier inférieur.

Une cassette de ce type est décrite, par exemple, dans le document GB-A-2173631. Toutefois, cette cassette ne comporte pas de moyens pour obturer l'ouverture de la cassette.

Le document EP-A-370690 décrit une cassette similaire qui comprend une partie intérieure et une partie intermédiaire, et qui est destinée à être placée dans une boîte extérieure recouvrant les ouvertures prévues dans la cassette en vue de son utilisation.

On a par ailleurs réalisé des cassettes pour disques CD-ROM comprenant un volet d'obturation mobile destiné à fermer l'ouverture pratiquée dans le fond de l'élément de boîtier inférieur, afin de protéger le disque contre le risque de détérioration mécanique et, également, pour limiter l'accès de poussières à l'intérieur de la cassette, lorsque le disque n'est pas en cours d'utilisation dans l'appareil de lecture. Ce volet d'obturation est muni d'un dispositif mécanique pour provoquer son effacement automatique, en dégageant ladite ouverture, lors de l'introduction de la cassette dans l'appareil de lecture et sa remise en position de fermeture, lorsque l'on retire la cassette de son logement récepteur, ménagé dans l'appareil de lecture. Un tel dispositif comporte généralement des leviers d'actionnement et au moins un ressort, il est donc relativement complexe, délicat et onéreux. La présence de ce dispositif augmente considérablement le prix de revient de ce genre de cassette à disque et elle entraîne, en outre, un risque non négligeable de défauts de fonctionnement, en particulier lorsque la cassette atteint un état d'usure plus ou moins avancé.

L'invention a notamment pour but de permettre de réduire, de manière importante, le prix de revient d'une cassette à disque du type susmentionné, munie d'un moyen de fermeture de son ouverture d'accès, tout en éliminant le risque d'un défaut de fonctionnement.

A cet effet, selon l'invention, la cassette comprend également un tiroir agencé pour recevoir, de manière amovible, ledit élément de boîtier inférieur, fermé par ledit couvercle de boîtier, ce tiroir comportant un fond qui constitue une paroi fermant ladite ouverture du fond de l'élément de boîtier inférieur, lorsque ce dernier est placé dans ledit tiroir.

Ainsi, dans la cassette selon l'invention, le volet d'obturation de l'ouverture du fond de l'élément de boîtier inférieur, de même que le mécanisme pour la manoeuvre de ce volet lors de l'introduction de la cassette dans l'appareil de lecture, sont supprimés et la cassette comprend simplement un tiroir ou élément de boîtier additionnel dans lequel il suffit d'introduire l'élément de boîtier inférieur, fermé par le couvercle de boîtier pour fermer ladite ouverture lorsque la cassette n'est pas en cours d'utilisation dans l'appareil de lecture, cette ouverture pouvant être dégagée par simple séparation de l'élément de boîtier additionnel du reste de la cassette, juste avant l'introduction de celle-ci dans l'appareil de lecture.

Ce tiroir peut être réalisé sous forme d'une pièce de forme simple, venue de moulage en matière plastique, et l'encombrement total de l'ensemble de la cassette, y compris ce tiroir ou élément additionnel, est à peine supérieur à celui d'une cassette de type usuel, le format de la partie de la cassette selon l'invention destinée à être introduite dans l'appareil de lecture restant, bien entendu, le même que celui des cassettes de type usuel.

L'élément de boitier inférieur et le couvercle de boîtier peuvent être réalisés sous forme de pièces séparées et présenter des moyens pour fixer, de manière amovible, le couvercle sur l'élément inférieur. Selon une forme d'exécution, l'élément de boîtier inférieur et le couvercle peuvent être assemblés entre eux au moyen d'une charnière. Dans ce cas, l'élément de boîtier inférieur et le couvercle peuvent être réalisés sous forme d'une seule pièce venue de moulage, ladite charnière étant constituée par une partie de paroi amincie.

La cassette selon l'invention peut par ailleurs être munie d'un élément rotatif de serrage du disque placé dans un logement agencé dans ledit couvercle.

Il est toutefois à noter que la cassette selon l'invention peut être utilisée avantageusement en relation avec un disque comprenant un élément de serrage de disque fixé sur le disque lui-même. Dans ce cas, la cassette ne se compose que de deux ou trois pièces en matière plastique, de forme peu compliquée et étant particulièrement simples et d'un faible prix de revient.

Des formes particulières d'exécution de la cassette selon l'invention seront décrites ci-après à titre d'exemples non limitatifs avec référence aux dessins annexés dans lesquels:
La Fig. 1 est une vue en perspective montrant une première forme d'exécution de la cassette;
La Fig. 2 est une vue en coupe montrant un détail de l'agencement de la cassette de la Fig. 1;
La Fig. 3 est une vue en perspective montrant une deuxième forme d'exécution de la cassette;
La Fig. 4 est une vue en coupe montrant un détail de l'agencement de la cassette de la Fig. 3;
La Fig. 5 est une vue en coupe montrant la disposition relative de la cassette selon une forme d'exécution non munie d'élément de serrage de disque, d'un disque comprenant un élément de serrage fixé sur le disque lui-même et de l'arbre d'entraînement du disque en rotation, lorsque la cassette est en position de lecture dans un appareil de lecture des informations enregistrées sur le disque;
La Fig. 6 est une vue en coupe montrant l'agencement d'un élément de serrage du disque et sa disposition dans un logement ménagé dans le couvercle de boîtier, selon une forme d'exécution de la cassette selon l'invention, munie d'un tel élément de serrage;
La Fig. 7 est une vue en coupe montrant la disposition relative de la cassette selon une forme d'exécution de cette cassette munie d'un élément de serrage de disque, et d'un disque en prise avec l'arbre d'entraînement du disque, lorsque la cassette est en position de lecture dans un appareil de lecture;
La Fig. 8 est une vue en coupe, en trois parties, illustrant la fabrication d'un élément de serrage de disque, agencé de manière à pouvoir être utilisé dans la cassette selon la Fig. 7 et la mise en place de cet élément dans cette cassette; et
La Fig. 9 est une vue en coupe montrant une variante du disque destiné à être utilisé dans la cassette de la Fig. 5.

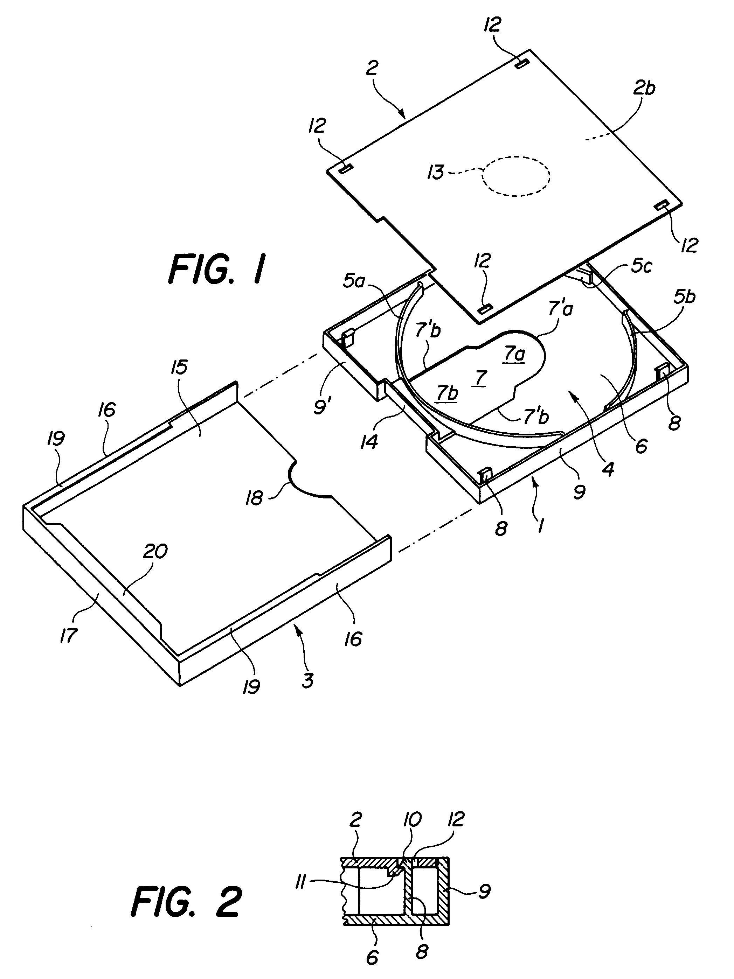

La cassette conforme à la forme d'exécution représentée à la Fig. 1 se compose d'un élément de boîtier inférieur 1, d'un couvercle de boîtier 2 et d'un tiroir 3.

L'élément de boîtier inférieur 1 comprend un compartiment 4 destiné à recevoir un disque (non représenté), ce compartiment étant délimité par trois éléments de parois en arc de cercle 5a, 5b, 5c.

Le fond 6 de l'élément de boîtier inférieur 1 comprend une ouverture 7, dont une partie 7a, délimitée par un bord 7'a en arc de cercle, est ménagée dans la partie centrale du fond 6 et est destinée à permettre le passage d'un arbre d'entraînement en rotation du disque, lorsque la cassette est placée dans un appareil de lecture du disque, de manière connue. Le reste de l'ouverture 7 constitue une partie 7b, délimitée par deux bords 7'b, destinée à permettre l'accès d'un dispositif de lecture du disque, par exemple un dispositif de lecture optique à laser (non représenté) appartenant également à cet appareil de lecture.

L'emplacement, les dimensions et la forme de l'ouverture 7, de même que, plus généralement, la forme et les dimensions extérieures de l'élément de boîtier inférieur 1, correspondent à ceux des modèles existant sur le marché pour le genre de disque dont il s'agit, par exemple, pour les disques CD-ROM et les cassettes à disque correspondantes.

Le couvercle de boîtier 2 est agencé de manière à pouvoir être fixé, de manière amovible, sur l'élément de boîtier inférieur 1 en enfermant un disque (non représenté) contenu dans le compartiment 4.

La fixation du couvercle 2 sur l'élément 1 s'effectue au moyen de quatre doigts d'accrochage 8 constitués de lamelles en saillie à partir du fond 6 de l'élément 1 et à l'intérieur de celui-ci, au voisinage de chacun de ses coins, parallèlement aux parois latérales 9 de l'élément 1. Comme représenté à la Fig. 2, l'extrémité de chacun de ces doigts 8 est munie d'une griffe 10 agencée de manière à pouvoir s'accrocher sur un rebord 11 en saillie dans une ouverture 12 pratiquée au voisinage de chacun des coins du couvercle 2, le décrochage de chaque griffe 10 pour dégager le rebord 11 lorsqu'on désire séparer le couvercle 2 de l'élément inférieur 1 pouvant s'effectuer par légère flexion du doigt 8 correspondant.

Un cercle représenté par une ligne discontinue à la Fig. 1 indique, en transparence, l'emplacement d'un logement 13, facultatif, sur la face inférieure 2b du couvercle 2, non visible à la Fig. 1. Ce logement 13, lorsqu'il existe, est prévu pour retenir un élément rotatif de serrage de disque selon un agencement identique ou analogue à celui des cassettes de type usuel.

Une forme d'exécution particulière de la cassette selon l'invention, munie d'un tel logement, sera décrite plus loin.

La face latérale arrière 9' de l'élément de boîtier inférieur 1 présente un renfoncement 14 qui facilite le repérage de l'orientation de la cassette en vue de son introduction correcte dans l'appareil de lecture du disque.

Le tiroir 3 est agencé pour recevoir, par translation, comme indiqué à la Fig. 1, l'ensemble constitué par l'élément de boîtier 1, fermé par son couvercle 2, et il comprend un fond 15, deux parois latérales 16 et une paroi arrière 17. Une découpure 18, en arc de cercle, pratiquée dans le bord antérieur du fond 15, facilite la prise en main de l'élément de boîtier 1 lorsque l'on désire le retirer du tiroir 3.

Deux rebords latéraux 19, s'étendant à partir du bord libre des parois latérales 16, sur une partie de la longueur de ce bord, et un rebord arrière 20, s'étendant à partir du bord libre de la paroi arrière 18, permettent de retenir l'ensemble formé par l'élément de boîtier 1 et son couvercle 2 lorsqu'ils sont placés dans le tiroir 3.

On comprend que le tiroir 3, qui ferme entièrement l'ouverture 7 lorsque la cassette n'est pas en position d'utilisation dans l'appareil de lecture du disque, assure une protection efficace du disque.

Avantageusement, un logement (non représenté) est ménagé dans la face supérieure du fond 15 pour recevoir une feuille ou une plaque portant des instructions concernant le mode d'emploi de la cassette et/ou du disque, ou tout autre genre d'indications.

On voit que les pièces 1, 2 et 3, constitutives de la cassette, ont des formes très simples. Elles peuvent être réalisées sous forme de pièces venues de moulage en matière plastique et le prix de revient d'une cassette constituée par ces trois pièces est donc très faible.

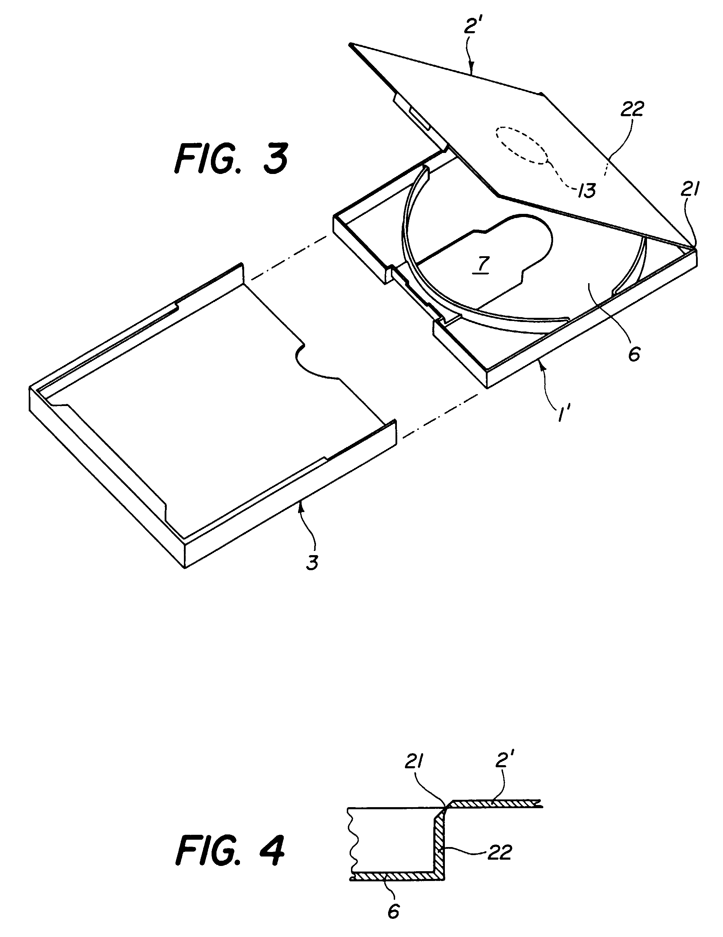

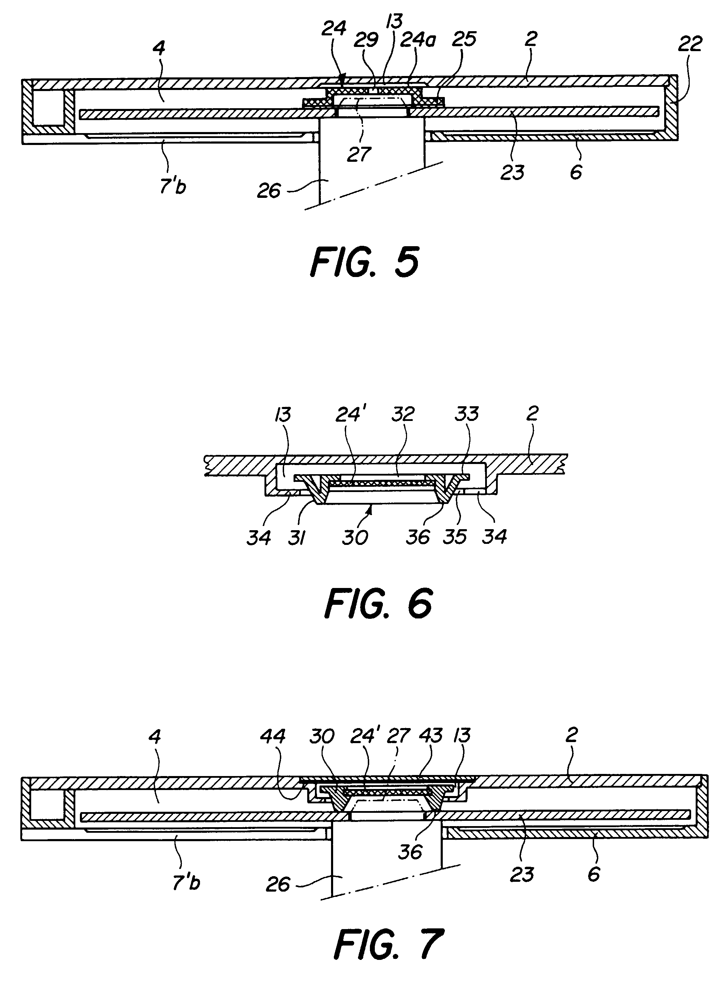

La cassette selon la forme d'exécution représentée à la Fig. 3 est similaire à celle de la Fig. 1. Ces deux formes d'exécution diffèrent essentiellement en ce que, dans la cassette de la Fig. 3, le couvercle 2' est assemblé avec l'élément de boîtier inférieur 1' au moyen d'une charnière. Comme on le voit à la Fig. 4, cette charnière est constituée par une partie de paroi amincie 21 qui assure la transition entre la paroi antérieure 22 de l'élément de boîtier 1 et le couvercle 2', cet élément 1 et ce couvercle 2' étant avantageusement réalisés en une seule pièce venue de moulage en matière plastique.

La Fig. 5 montre la disposition relative des éléments fonctionnels de la cassette et d'un disque, agencé pour être utilisé avec cette cassette, selon une forme d'exécution de la cassette non munie d'élément de serrage de disque. Comme on le voit à la Fig. 5, qui représente la disposition des éléments de la cassette lorsque celle-ci est placée dans un appareil de lecture du disque, le disque 23 est placé dans le compartiment 4, à l'intérieur de l'élément de boîtier inférieur 1, fermé par son couvercle 2. Une pièce circulaire 24, ayant la forme d'une cuvette présentant un rebord circulaire 25 plat et dont le fond est constitué par une plaquette 24a en un matériau aimantable de manière non permanente, telle que le fer doux, est collée sur la partie centrale du disque 23, concentriquement à celui-ci, avec le rebord 25 appliqué tout autour de l'ouverture centrale du disque 23.

Lorsque, de manière connue en soi, on place la surface frontale 27 de l'extrémité aimantée de l'arbre 26 d'entraînement en rotation du disque 23 dans l'ouverture centrale du disque 23, dans la position représentée à la Fig. 5, la partie centrale plate aimantable 24a de la pièce 24 est attirée par la surface 27 en solidarisant le disque 23 de l'arbre 26. On peut ainsi faire tourner le disque 23 au moyen de l'arbre 26.

Pour éviter qu'une surpression d'air ne se produise lors de l'introduction de l'extrémité de l'arbre 26 dans l'ouverture centrale du disque 23, en entraînant un risque de déplacement intempestif de la pièce 24, ainsi que pour éviter le risque d'effet de ventouse lors de l'extraction de l'extrémité de l'arbre 26, une petite ouverture 29, servant d'évent, est ménagée au centre de la pièce 24.

Après lecture des informations enregistrées sur le disque 23, lorsque l'on désire retirer la cassette de l'appareil de lecture du disque, il suffit de tirer vers le bas l'arbre d'entraînement 26 en exerçant au début de ce mouvement une force supérieure à la force d'attraction de la partie centrale 24 a de la pièce 24 par la surface frontale 27 de l'arbre 26, sur une distance suffisante pour que ce dernier sorte complètement de l'ouverture 7 du fond 6 de l'élément de boîtier inférieur 1. Le disque 23 vient alors se poser sur la surface du fond 6 de l'élément 1 et le retrait de la cassette hors de son logement dans l'appareil de lecture devient possible.

Comme on le voit à la Fig. 5, le couvercle 2 ne présente pas de logement destiné à retenir un élément de serrage du disque, à l'emplacement correspondant à celui-ci qui est indiqué par le cercle 13 aux Figures 1 et 3, mais simplement une partie amincie, également repérée par le chiffre 13 qui évite le frottement de l'élément de serrage 24 contre la surface intérieure du couvercle 2 lorsque la cassette est dans la position de lecture de disque.

Comme on le voit à la Fig. 6, conformément à une forme d'exécution de la cassette munie d'un élément de serrage du disque, cet élément de serrage 30 est constitué par une pièce de forme circulaire, avantageusement réalisée en matière plastique, comprenant une projection annulaire 31, dont la surface frontale plane 36 est destinée à prendre appui sur la surface supérieure du disque, afin de le serrer contre l'arbre d'entraînement du disque en rotation, comme indiqué plus loin, et un logement central 32 dans lequel est placée une plaquette circulaire 24', en matériau aimantable de manière non permanente.

L'élément de serrage 30 présente, en outre, un rebord périphérique 33 permettant de retenir l'ensemble de l'élément 30 à l'intérieur d'un logement 13, ménagée dans le couvercle 2 de la cassette, tout en lui assurant aussi bien une liberté de translation parallèlement à l'axe de l'arbre d'entraînement 26 (voir Fig. 7) qu'une liberté de déplacement en rotation autour de son axe, le maintien de l'élément 30 à l'intérieur du logement 13 étant assuré par collaboration du rebord 33 avec une pluralité d'organes de rétention 34 s'étendant parallèlement à la surface du couvercle en direction du centre d'une ouverture 35 permettant le passage de la projection annulaire 31.

Comme on le voit à la Fig. 7, lorsque la cassette correspondant à une forme d'exécution similaire à celle dont un détail est illustré à la Fig. 6, est placée dans l'appareil de lecture du disque, l'arbre 26 d'entraînement en rotation du disque 23 étant engagé dans l'ouverture centrale de celui-ci, la pièce aimantable 24' est attirée par la surface frontale 27 de l'extrémité aimantée de l'arbre 26, de manière analogue au cas de la forme d'exécution illustrée à la Fig. 5. La surface frontale plane 36 de la projection annulaire 31 vient alors s'appuyer fortement contre la surface supérieure du disque 23, autour de l'ouverture centrale de ce dernier, en le solidarisant de l'arbre 26.

La mise en position permettant le retrait de la cassette, après lecture des informations enregistrées sur le disque 23, s'effectue de manière analogue au cas de la forme d'exécution illustrée à la Fig. 5.

Il est à noter que, dans la forme d'exécution représentée à la Fig. 7, le logement 13 n'est pas fermé, du côté extérieur de la cassette, par une paroi amincie faisant partie intégrante du couvercle 2 comme dans le cas de la forme d'exécution de la Fig. 6, mais par un élément de paroi 43 en forme de disque que l'on fixe sur le couvercle 2, par exemple par collage de sa partie périphérique sur un rebord 44 ménagé à cet effet tout autour de l'ouverture extérieure du logement 13, après introduction de l'élément de serrage 30 dans ce logement.

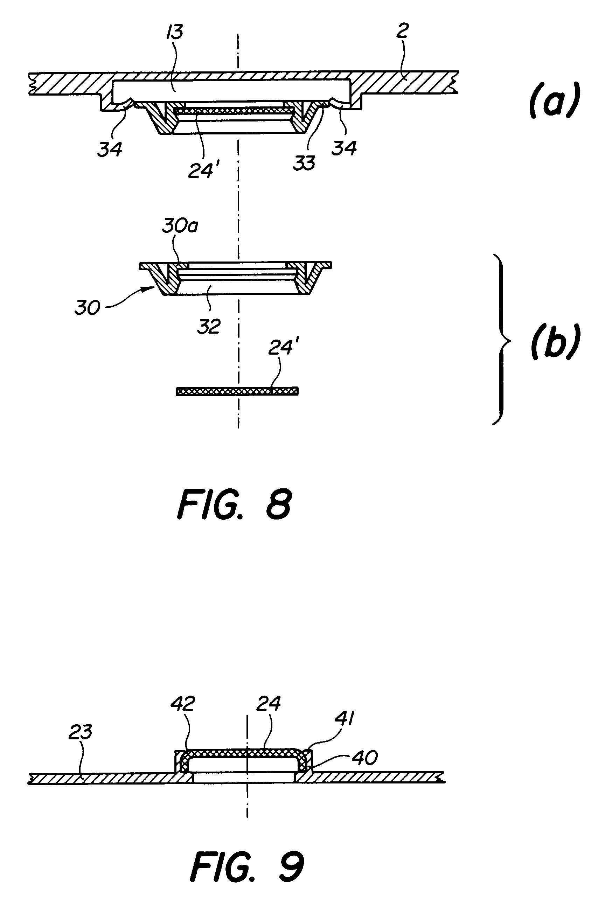

Comme on le voit à la Fig. 8, la plaquette aimantable 24' peut être mise en place de manière très simple à l'intérieur du logement central 32 du corps 30a de l'élément de serrage 30, qui est avantageusement constitué par une pièce venue de moulage en matière plastique. Comme illustré par la partie 8 (b) de la Fig. 8, la mise en place de la plaquette aimantable 24' dans le corps 30a s'effectue par simple translation et la plaquette 24' est fixée sur le corps 30a de toute manière appropriée, par exemple par collage.

La partie 8 (a) de la Fig. 8 montre l'introduction de l'élément 30, préalablement muni de la plaquette aimantable 24', dans le logement 13 du couvercle 2 (réalisé conformément à la forme d'exécution illustrée à la Fig. 6), par déformation temporaire, de manière élastique, des éléments de rétention 34 de ce logement au passage du rebord 33 de l'élément 30.

La Fig. 9 montre une variante de la forme d'exécution du disque 23 de la Fig. 5. Selon cette variante, la pièce de serrage 24 du disque 23 est fixée sur celui-ci, non pas par collage, mais par clipsage, au moyen de doigts 40, faisant saillie à partir de la surface supérieure du disque 23, autour de l'ouverture centrale de ce dernier, ces doigts 40 étant terminés par des griffes 41 agencées pour prendre appui sur le bord 42 de la pièce 24 en la solidarisant du disque 23.

## Revendications

1. Cassette à disque comprenant un élément de boîtier inférieur (1) agencé pour servir de logement de disque, le fond de cet élément comportant une ouverture (7), dont une partie (7a) est destinée à permettre le passage d'un arbre d'entraînement du disque en rotation, cet arbre appartenant à un appareil de lecture du disque, et dont une autre partie (7b) est destinée à permettre l'accès d'un dispositif de lecture du disque appartenant à ce même appareil, et un couvercle de boîtier (2) agencé de manière à permettre de fermer ou d'ouvrir la cassette en constituant une paroi principale en regard du fond (6) de l'élément de boîtier inférieur (1), caractérisée en ce que la cassette comprend également un tiroir (3) agencé pour recevoir, de manière amovible, ledit élément de boîtier inférieur (1) fermé par ledit couvercle de boîtier (2), ce tiroir comportant un fond (15) qui constitue une paroi fermant ladite ouverture (7) du fond (6) de l'élément de boîtier inférieur (1) lorsque ce dernier est placé dans ledit tiroir.

2. Cassette selon la revendication 1, caractérisée en ce que ledit élément de boîtier inférieur (1) et ledit couvercle de boîtier (2) sont réalisés sous forme de pièces séparées et en ce qu'ils présentent des moyens pour fixer, de manière amovible, le couvercle (2) sur l'élément inférieur (1).

3. Cassette selon la revendication 1, caractérisée en ce que ledit élément de boîtier inférieur (1) et ledit couvercle (2') sont assemblés entre eux au moyen d'une charnière (21).

4. Cassette selon la revendication 3, caractérisée en ce que ledit élément de boîtier inférieur (1) et ledit couvercle (2') sont réalisés sous forme d'une seule pièce venue de moulage, ladite charnière (21) étant constituée par une partie de paroi amincie.

5. Cassette selon l'une des revendications 1 à 4, caractérisée par le fait qu'elle est munie d'un élément rotatif (30) de serrage du disque placé dans un logement (13) agencé dans ledit couvercle (2).

## Patentansprüche

1. Plattenkassette mit einem unteren Gehäuseteil (1), der zur Aufnahme der Platte ausgebildet ist, wobei der Boden dieses Teils eine Öffnung (7) aufweist, von der ein Teil (7a) dazu bestimmt ist, den Durchgang einer Antriebswelle zur Drehung der Platte zu ermöglichen, wobei diese Welle zu einem Plattenlesegerät gehört, und von der ein anderer Teil (7b) dazu bestimmt ist, den Zugang einer Lesevorrichtung für die Platte, die zu diesem selben Gerät gehört, zu ermöglichen, und mit einem Gehäusedeckel (2), der so ausgebildet ist, dass er das Schliessen oder Öffnen der Kassette ermöglicht, wobei er eine Hauptwand bildet, die gegenüber dem Boden (6) des unteren Gehäuseelements (1) liegt, dadurch gekennzeichnet, dass die Kassette ferner ein Schubfach (3) aufweist, das so ausgebildet ist, dass es das genannte untere Gehäuseteil (1), welches mit dem genannten Gehäusedeckel (2) geschlossen ist, in herausnehmbarer Weise aufnehmen kann, wobei dieses Schubfach einen Boden (15) besitzt, der eine die genannte Öffnung (7) des Bodens (6) des unteren Gehäuseteils (1) schliessende Wand bildet, wenn sich dieses Gehäuseteil in dem genannten Schubfach befindet.

2. Plattenkassette nach Patentanspruch 1, dadurch gekennzeichnet, dass das genannte untere Gehäuseteil (1) und der genannte Gehäusedeckel (2) als getrennte Teile ausgeführt sind und dass sie Mittel aufweisen, um den Deckel (2) auf dem unteren Teil (1) in abnehmbarer Weise zu befestigen.

3. Plattenkassette nach Patentanspruch 1, dadurch gekennzeichnet, dass das genannte untere Gehäuseteil (1) und der genannte Deckel (2') miteinander mit Hilfe eines Scharniers (21) verbunden sind.

4. Plattenkassette nach Patentanspruch 3, dadurch gekennzeichnet, dass das genannte untere Gehäuseteil (1) und der genannte Deckel (2') in Form eines einzigen gegossenen Teils hergestellt sind, wobei das genannte Scharnier (21) durch ein Wandteil verringerter Dicke gebildet wird.

5. Plattenkassette nach einem der Patentansprüche 1 bis 4, dadurch gekennzeichnet, dass sie mit einem drehbaren Plattenklemmelement (30) versehen ist, welches sich in einem in dem genannten Deckel (2) ausgebildeten Aufnahmeteil (13) befindet.

## Claims

1. A disc cartridge comprising a lower casing element (1) arranged for use as a disc housing, the bottom of this element comprising an opening (7), a part (7a) of which is intended to provide a passage for a shaft for driving the disc in rotation, and another part (7b) of which is intended to provide access for a disc reading device belonging to the same apparatus, and a casing cover (2) arranged for providing a means for closing or opening the cartridge, the cover constituting a main wall opposite the bottom (6) of the lower casing element (1), characterized in that the cartridge further comprises a drawer (3) arranged for removably receiving said lower casing element (1) closed by said casing cover (2), this drawer comprising a bottom (15) which constitutes a wall closing said opening (7) of the bottom (6) of the lower casing element (1) when the latter is placed in said drawer.

2. Cartridge according to claim 1, characterized in that said lower casing element (1) and said casing cover (2) are made as separate parts and in that they have means for removably fixing the cover (2) on the lower element (1).

3. Cartridge according to claim 1, characterized in that said lower casing element (1) and said cover (2') are connected to each other by means of a hinge (21).

4. Cartridge according to claim 3, characterized in that said lower casing element (1) and said cover (2') are made as a single moulded part, said hinge (21) being formed by a wall part reduced in thickness.

5. Cartridge according to one of claims 1 to 4, characterized in that it is provided with a rotatory disc clamping element (30) placed in a housing (13) provided in said cover (2).
